# EUROPÄISCHE PATENTANMELDUNG

(11) **EP 4 782 951 A1**
(43) Veröffentlichungstag der Anmeldung: **29.07.2026**
(21) Anmeldenummer: 25153326.1
(22) Anmeldetag: 22.01.2025
(51) Int. Cl.: G05D 1/241, A01D 34/00, G01D 5/14, G05D 105/15, G05D 107/20, G05D 109/10

(54) **VERFAHREN ZUM BETREIBEN EINES AUTONOMEN MOBILEN OUTDOORBEARBEITUNGSROBOTERS UND AUTONOMER MOBILER OUTDOORBEARBEITUNGSROBOTER ZUM AUSFÜHREN DES VERFAHRENS**

(71) Anmelder: Andreas Stihl AG & Co. KG, 71336 Waiblingen (DE)
(72) Erfinder: Gerk, Nikolai, 36137 Großenlüder (DE); Mitschke, Marcel, 73614 Schorndorf (DE)
(74) Vertreter: Patentanwälte Ruff, Wilhelm, Beier, Dauster & Partner mbB

(57) **Zusammenfassung**

Die Erfindung bezieht sich auf ein Verfahren zum Betreiben eines autonomen mobilen Outdoorbearbeitungsroboters (1),
- der ein Chassis (3), ein Berührungsteil (4) und ein Magnetsensorsystem (5) aufweist,
- wobei das Chassis (3) zu einer Fahrbewegung (FB) des Outdoorbearbeitungsroboters (1) auf einer Arbeitsfläche (x, y) ausgebildet ist,
- wobei das Berührungsteil (4) zu einer Ausweichbewegung (AB) durch die Fahrbewegung (FB) und eine Hindernisberührung (HB) verursacht ausgebildet und in Bezug auf das Chassis (3) beweglich gelagert ist, und
- wobei das Magnetsensorsystem (5) einen Dauermagneten (6) und mindestens zwei Hallsensoren (7a, 7b, 7c) aufweist,
- wobei die Hallsensoren (7a-c) an dem Chassis (3) befestigt sind und der Dauermagnet (6) an dem Berührungsteil (4) befestigt ist, oder wobei der Dauermagnet an dem Chassis befestigt ist und die Hallsensoren an dem Berührungsteil befestigt sind, und
- wobei der Dauermagnet (6) und die Hallsensoren (7a-c) zu einer Erzeugung eines jeweiligen Sensorsignals (Sla, Slb, Slc) in den Hallsensoren (7a-c) durch ein Durchfließen der Hallsensoren (7a-c) von einem Magnetfeld (MF) des Dauermagnets (6) verursacht ausgebildet und positioniert sind,
- wobei das Verfahren die Schritte aufweist:
a) Bestimmen eines Betrags (PVEB), und insbesondere einer Richtung (PVER), einer Positionsveränderung (PVE) des Dauermagnets (6) in Bezug auf die Hallsensoren (7a-c) entlang der Arbeitsfläche (x, y) durch die Ausweichbewegung (AB) verursacht mittels Auswertens der erzeugten Sensorsignale (Sla-c), wobei in dem Auswerten ein Einfluss einer Positionsveränderung (PVH) des Dauermagnets (6) in Bezug auf die Hallsensoren (7a-c) entlang einer Höhenrichtung (z) zu der Arbeitsfläche (x, y) durch die Ausweichbewegung (AB) verursacht auf die erzeugten Sensorsignale (Sla-c) berücksichtigt wird, und
b) Betreiben des Outdoorbearbeitungsroboters (1) in Abhängigkeit des bestimmten Betrags (PVEB), und insbesondere der bestimmten Richtung (PVER), der Positionsveränderung (PVE) entlang der Arbeitsfläche (x, y).

## Beschreibung

### ANWENDUNGSGEBIET UND STAND DER TECHNIK

Die Erfindung bezieht sich auf ein Verfahren zum Betreiben eines autonomen mobilen Outdoorbearbeitungsroboters und den autonomen mobilen Outdoorbearbeitungsroboter zum Ausführen des Verfahrens.

### AUFGABE UND LÖSUNG

Der Erfindung liegt als Aufgabe die Bereitstellung eines Verfahrens zum Betreiben eines autonomen mobilen Outdoorbearbeitungsroboters und des autonomen mobilen Outdoorbearbeitungsroboters zum Ausführen des Verfahrens zugrunde, die verbesserte Eigenschaften aufweisen.

Die Erfindung löst diese Aufgabe durch die Bereitstellung eines Verfahrens und eines autonomen mobilen Outdoorbearbeitungsroboters beschrieben in den unabhängigen Ansprüchen. Vorteilhafte Weiterbildungen und/oder Ausgestaltungen der Erfindung sind in den abhängigen Ansprüchen beschrieben.

Das erfindungsgemäße Verfahren ist zum Betreiben eines autonomen mobilen Outdoorbearbeitungsroboters. Der Outdoorbearbeitungsroboter weist ein Chassis, ein Berührungsteil und ein Magnetsensorsystem auf. Das Chassis ist zu einer Fahrbewegung des Outdoorbearbeitungsroboters auf einer Arbeitsfläche ausgebildet. Das Berührungsteil ist zu einer Ausweichbewegung, insbesondere genau und/oder direkt und/oder mechanisch, durch die Fahrbewegung und eine Hindernisberührung, insbesondere gemeinsam bzw. miteinander bzw. gleichzeitig, verursacht ausgebildet und in Bezug auf das Chassis beweglich gelagert. Das Magnetsensorsystem weist, insbesondere genau, einen Dauermagneten und mindestens zwei, insbesondere mindestens oder genau drei, Hallsensoren auf. Entweder sind, insbesondere alle, die Hallsensoren an dem Chassis befestigt und der Dauermagnet ist an dem Berührungsteil befestigt, oder der Dauermagnet ist an dem Chassis befestigt und, insbesondere alle, die Hallsensoren sind an dem Berührungsteil befestigt. Der Dauermagnet und die Hallsensoren sind zu einer Erzeugung eines jeweiligen Sensorsignals in den Hallsensoren durch ein Durchfließen der Hallsensoren von einem Magnetfeld des Dauermagnets verursacht ausgebildet und positioniert. Das Verfahren weist die Schritte auf:
a) Bestimmen eines Betrags, und insbesondere einer Richtung, einer Positionsveränderung des Dauermagnets, und insbesondere somit des Berührungsteils, in Bezug auf die Hallsensoren, und insbesondere somit das Chassis, entlang der Arbeitsfläche durch die Ausweichbewegung verursacht mittels Auswertens der erzeugten Sensorsignale. In dem Auswerten wird ein Einfluss einer Positionsveränderung des Dauermagnets, und insbesondere somit des Berührungsteils, in Bezug auf die Hallsensoren, und insbesondere somit das Chassis, entlang einer Höhenrichtung, insbesondere orthogonal, zu der Arbeitsfläche, insbesondere von der Arbeitsfläche weg, durch die Ausweichbewegung verursacht auf die erzeugten Sensorsignale berücksichtigt.
b) Betreiben des Outdoorbearbeitungsroboters in Abhängigkeit des bestimmten Betrags, und insbesondere der bestimmten Richtung, der Positionsveränderung entlang der Arbeitsfläche.

Dies, insbesondere die Berücksichtigung des Einflusses der Positionsveränderung des Dauermagnets in Bezug auf die Hallsensoren entlang der Höhenrichtung in dem Auswerten, ermöglicht ein exaktes Bestimmen des Betrags, und insbesondere der Richtung, der Positionsveränderung des Dauermagnets in Bezug auf die Hallsensoren entlang der Arbeitsfläche, insbesondere im Unterschied zu einem Bestimmen ohne die Berücksichtigung in dem Auswerten. Somit ermöglicht dies ein gutes Betreiben des Outdoorbearbeitungsroboters in Abhängigkeit des bestimmten Betrags, und insbesondere der bestimmten Richtung, der Positionsveränderung entlang der Arbeitsfläche.

Insbesondere können/kann das Verfahren, das Betreiben, die Fahrbewegung, die Ausweichbewegung, die Erzeugung, das Bestimmen und/oder das Auswerten automatisch und/oder computerimplementiert sein und/oder mittels des Outdoorbearbeitungsroboters ausgeführt werden.

Der Begriff "erfolgen" oder die Formulierung "durchgeführt werden" oder "implementiert werden" kann für die Formulierung "ausgeführt werden" synonym verwendet werden.

Autonom mobil kann bedeuten, dass der Outdoorbearbeitungsroboter sich selbstständig, selbstbestimmt, selbstgesteuert, selbstgeführt und/oder unabhängig von einem Benutzer bewegen kann.

Der Outdoorbearbeitungsroboter kann ein Grünflächenbearbeitungsroboter, insbesondere ein Rasenmähroboter, insbesondere ein Mulchmähroboter, und/oder elektrisch sein.

Die Arbeitsfläche kann vorgegeben, insbesondere begrenzt, und/oder eine Grünfläche, wie z.B. eine Wiese mit Rasen, und/oder mittels des Outdoorbearbeitungsroboters zu bearbeiten sein.

Der Outdoorbearbeitungsroboter kann ein Bearbeitungswerkzeug aufweisen. Insbesondere kann das Bearbeitungswerkzeug zur Bearbeitung der Arbeitsfläche ausgebildet sein. Zusätzlich oder alternativ kann das Bearbeitungswerkzeug ein Rasenmähwerkzeug sein. Insbesondere kann das Rasenmähwerkzeug zum Mähen der Arbeitsfläche ausgebildet sein. Zusätzlich oder alternativ kann das Rasenmähwerkzeug mindestens einen Mähfaden, mindestens ein Kunststoffmesser, mindestens ein Metallmesser und/oder ein Metallschneideblatt mit mindestens einer Schneidkante und/oder mit mindestens einem Schneidezahn aufweisen. Weiter zusätzlich oder alternativ kann das Rasenmähwerkzeug als ein rotierendes Rasenmähwerkzeug und dazu ausgebildet sein, ein zu mähendes Gut im sogenannten Freischnittverfahren ohne Gegenschneide zu mähen.

Der Begriff "umfasst" oder "hat" kann für den Begriff "aufweist" synonym verwendet werden.

Der Begriff "Fahrwerk" oder "Fahrgestell" kann für den Begriff "Chassis" synonym verwendet werden.

Der Begriff "Berührungselement" kann für den Begriff "Berührungsteil" synonym verwendet werden.

Das Berührungsteil kann starr bzw. inflexibel und/oder einteilig bzw. einstückig sein.

Der Begriff "entlang" oder "parallel" kann für den Begriff "auf synonym verwendet werden.

Der Begriff "Fahrebene" kann für den Begriff "Arbeitsfläche" synonym verwendet werden.

Die Arbeitsfläche kann horizontal sein.

Der Begriff "konfiguriert" oder "eingerichtet" oder "vorgesehen" kann für den Begriff "ausgebildet" synonym verwendet werden.

Der Begriff "Auslenkung" kann für den Begriff "Ausweichbewegung" synonym verwendet werden.

Die Fahrbewegung kann in einer Fahrtrichtung und/oder nach vorne sein.

Die Ausweichbewegung kann entgegen der Fahrtrichtung und/oder nach hinten, und/oder entlang der Arbeitsfläche und entlang der Höhenrichtung und/oder nach oben, und/oder eine Verschiebung bzw. eine Translation, insbesondere entgegen der Fahrtrichtung, und eine Verdrehung bzw. eine Rotation, insbesondere um eine Drehachse herum nicht-parallel, insbesondere orthogonal, zu der Fahrtrichtung und/oder der Höhenrichtung und/oder nicht-orthogonal, insbesondere parallel, zu der Arbeitsfläche, sein.

Die Hindernisberührung kann mit einer in die Fahrtrichtung und/oder nach vorne gewandten Seite bzw. Vorderseite bzw. Front des Berührungsteils und/oder eine, insbesondere direkte, Berührung eines, insbesondere immobilen, Hindernisses, wie z.B. einer Wand, sein.

Der Begriff "unmittelbar" kann für den Begriff "direkt" synonym verwendet werden.

Der Begriff "bewirkt" kann synonym für den Begriff "verursacht" verwendet werden.

Der Begriff "gegenüber" oder die Formulierung "relativ zu" kann für die Formulierung "in Bezug auf" synonym verwendet werden.

Befestigt kann direkt und/oder mittels einer Schraube befestigt sein.

Der Begriff "Permanentmagnet" kann für den Begriff "Dauermagnet" synonym verwendet werden.

Der Begriff "nur" kann für den Begriff "genau" synonym verwendet werden.

Die Hallsensoren können elektrisch und/oder zur Messung des Magnetfelds ausgebildet sein.

Das Sensorsignal kann eine Hallspannung sein und/oder einen Betrag aufweisen.

Der Begriff "Wert" kann für den Begriff "Betrag" synonym verwendet werden.

Die Hallsensoren können an mindestens zwei verschiedenen Positionen positioniert bzw. räumlich angeordnet sein.

Der Dauermagnet und die Hallsensoren können ausgebildet und positioniert sein derart, dass bei bzw. im Falle der Ausweichbewegung eine Veränderung der Sensorsignale auftreten kann bzw. die Sensorsignale sich verändern können, insbesondere über einen Weg der Ausweichbewegung, und/oder, insbesondere somit, der Betrag, und insbesondere die Richtung, der Positionsveränderung entlang der Arbeitsfläche mittels des Auswertens der Sensorsignale bestimmbar sein kann, wobei in dem Auswerten der Einfluss der Positionsveränderung entlang der Höhenrichtung auf die Sensorsignale berücksichtigbar sein kann.

Der Begriff "Ortsveränderung" kann für den Begriff "Positionsveränderung" synonym verwendet werden.

Die Höhenrichtung kann vertikal sein.

Die Positionsveränderung entlang der Höhenrichtung kann möglich und/oder eine Distanzvergrößerung sein, und/oder der Dauermagnet kann in Bezug auf die Hallsensoren mit zunehmender Ausweichbewegung, insbesondere stetig, angehoben sein oder werden.

Das Chassis kann mindestens ein angetriebenes Laufrad und mindestens ein nichtangetriebenes Laufrad zu der Fahrbewegung aufweisen. Mindestens das nicht-angetriebene Laufrad kann vor mindestens dem angetriebenen Laufrad in der Fahrtrichtung räumlich angeordnet sein. Insbesondere kann vor in einer Vorzug- bzw. Hauptbewegungsrichtung des Outdoorbearbeitungsroboters sein.

Das Chassis kann ein Fahrantriebssystem aufweisen. Das Fahrantriebssystem kann zu einem Antrieb, insbesondere des mindestens einen angetriebenen Laufrads, zu der Fahrbewegung ausgebildet sein. Das Betreiben des Outdoorbearbeitungsroboters kann ein Betreiben des Fahrantriebssystems aufweisen, insbesondere sein. Insbesondere kann das Fahrantriebssystem elektrisch und/oder ein Motorantriebssystem sein.

Die Formulierung "basierend auf" kann für die Formulierung "in Abhängigkeit" synonym verwendet werden.

Der Schritt a) kann, insbesondere mehrfach, wiederholt ausgeführt werden.

Der Schritt b) kann zeitlich nach dem Schritt a) und/oder, insbesondere mehrfach, wiederholt ausgeführt werden.

Mehrfach wiederholt kann regelmäßig, kontinuierlich und/oder fortlaufend sein.

Im Übrigen wird auf die Fachliteratur verwiesen.

In einer Weiterbildung der Erfindung weist der Outdoorbearbeitungsroboter mindestens eine Lagerung, insbesondere mindestens zwei, insbesondere mindestens drei, insbesondere mindestens oder genau vier Lagerungen, auf. Mittels der Lagerung ist das Berührungsteil zu der Ausweichbewegung in Bezug auf das Chassis beweglich gelagert. Dies ermöglicht die Positionsveränderung entlang der Arbeitsfläche und entlang der Höhenrichtung. Insbesondere kann die Lagerung eine Feder, insbesondere eine Schraubenfeder, insbesondere mit einer Schraubenachse nicht-parallel, insbesondere orthogonal, zu der Arbeitsfläche, aufweisen. Zusätzlich oder alternativ kann die Lagerung wie in der EP 4 233 515 A1 offenbart bzw. ein "Joystick"-Lagerelement, insbesondere auch teleskopierbar, in Verbindung mit einer Schraubenfeder sein. Im Übrigen wird auf die Fachliteratur verwiesen.

In einer Weiterbildung der Erfindung ist an mindestens drei, insbesondere genau vier, Lagerpunkten das Berührungsteil zu der Ausweichbewegung in Bezug auf das Chassis beweglich gelagert. Die Lagerpunkte sind in einer Draufsicht auf die Arbeitsfläche um den Dauermagneten und, insbesondere alle, die Hallsensoren herum positioniert, insbesondere ohne und mit der Positionsveränderung entlang der Arbeitsfläche. Dies ermöglicht die Positionsveränderung entlang der Höhenrichtung, insbesondere von der Arbeitsfläche weg und/oder die Distanzvergrößerung. Insbesondere kann die Formulierung "die Arbeitsfläche von oben betrachtet" oder "in einer Richtung orthogonal zu der Arbeitsfläche" für die Formulierung "in der Draufsicht auf die Arbeitsfläche" synonym verwendet werden. Zusätzlich oder alternativ kann der Begriff "Projektion" für den Begriff "Draufsicht" synonym verwendet werden. Weiter zusätzlich oder alternativ können in der Draufsicht auf die Arbeitsfläche der Dauermagnet und die Hallsensoren innerhalb der Lagerpunkte positioniert sein. Im Übrigen wird auf die Fachliteratur verwiesen.

In einer Weiterbildung der Erfindung ist das Berührungsteil, und insbesondere somit der Dauermagnet, entlang der Höhenrichtung oberhalb des Chassis, und insbesondere somit der Hallsensoren, gelagert. Dies ermöglicht eine Abdeckung bzw. einen Schutz des Dauermagneten und der Hallsensoren mittels des Berührungsteils. Insbesondere kann das Berührungsteil auf dem Chassis gelagert sein. Zusätzlich oder alternativ kann der Dauermagnet unterhalb des Berührungsteils positioniert sein. Weiter zusätzlich oder alternativ können die Hallsensoren oberhalb des Chassis positioniert sein. Im Übrigen wird auf die Fachliteratur verwiesen.

In einer Weiterbildung der Erfindung ist das Berührungsteil eine Abdeckhaube. Dies ermöglicht eine Multifunktion des Berührungsteils, insbesondere die Abdeckung bzw. den Schutz des Dauermagneten und der Hallsensoren mittels des Berührungsteils. Insbesondere kann der Begriff "Schutzhaube" oder "Bumper" für den Begriff "Abdeckhaube" synonym verwendet werden. Im Übrigen wird auf die Fachliteratur verwiesen.

In einer Weiterbildung der Erfindung sind, insbesondere alle, die Hallsensoren in einer gemeinsamen Sensorebene positioniert. Die Hallsensoren weisen jeweils, insbesondere genau, eine zu der Sensorebene nicht-parallele, insbesondere orthogonale, Erfassungsrichtung auf. Die Hallsensoren sind dazu bzw. derart ausgebildet, dass, insbesondere genau, eine zu der Erfassungsrichtung parallele Komponente des Magnetfelds in den Hallsensoren das jeweilige Sensorsignal verursacht. Insbesondere ist die Sensorebene nicht-orthogonal, insbesondere parallel, zu der Arbeitsfläche. Dies ermöglicht einen einfachen Aufbau des Outdoorbearbeitungsroboters. Insbesondere kann der Outdoorbearbeitungsroboter eine, insbesondere starre, Leiterplatte (Englisch: printed circuit board; Abkürzung: PCB) aufweisen, die die Hallsensoren tragen kann. Zusätzlich oder alternativ kann die Erfassungsrichtung nicht-orthogonal, insbesondere parallel, zu der Höhenrichtung sein. Weiter zusätzlich oder alternativ kann der Begriff "Messungsrichtung" oder "Detektierungsrichtung" für den Begriff "Erfassungsrichtung" synonym verwendet werden. Im Übrigen wird auf die Fachliteratur verwiesen.

In einer Weiterbildung, insbesondere einer Ausgestaltung, der Erfindung weist der Dauermagnet eine Magnetisierungsachse auf. Die Magnetisierungsachse ist nicht-parallel, insbesondere orthogonal, zu der Arbeitsfläche und/oder der Sensorebene. Insbesondere ist der Dauermagnet ein axial magnetisierter, insbesondere kreisförmiger, Ringmagnet. Dies ermöglicht das Bestimmen des Betrags, und insbesondere der Richtung, der Positionsveränderung entlang der Arbeitsfläche und/oder mittels des Auswertens der Sensorsignale. Zusätzlich oder alternativ ermöglicht dies den Einfluss der Positionsveränderung entlang der Höhenrichtung auf die Sensorsignale. Im Übrigen wird auf die Fachliteratur verwiesen.

In einer Weiterbildung der Erfindung weist der Dauermagnet die Magnetisierungsachse auf. Das Magnetsensorsystem weist mindestens oder genau drei Hallsensoren auf. Die Hallsensoren sind ohne die Positionsveränderung entlang der Arbeitsfläche auf einem gemeinsamen Kreis um die Magnetisierungsachse herum positioniert, insbesondere mit einem gleichen Bogenwinkel zueinander versetzt. Dies ermöglicht einen einfachen Aufbau des Outdoorbearbeitungsroboters. Zusätzlich oder alternativ ermöglicht dies das Bestimmen des Betrags, und insbesondere der Richtung, der Positionsveränderung entlang der Arbeitsfläche mittels des Auswertens der Sensorsignale. Weiter zusätzlich oder alternativ ermöglicht dies den Einfluss der Positionsveränderung entlang der Höhenrichtung auf die Sensorsignale. Insbesondere kann die Formulierung "in einer Ruheposition" für die Formulierung "ohne die Positionsveränderung entlang der Arbeitsfläche" synonym verwendet werden. Zusätzlich oder alternativ kann der Begriff "Umfangswinkel" für den Begriff "Bogenwinkel" synonym verwendet werden. Weiter zusätzlich oder alternativ kann der Begriff "voneinander" für den Begriff "zueinander" synonym verwendet werden. Weiter zusätzlich oder alternativ können die Hallsensoren ohne die Positionsveränderung entlang der Arbeitsfläche mit einer gleichen Distanz zu der Magnetisierungsachse um die Magnetisierungsachse herum positioniert sein. Weiter zusätzlich oder alternativ können die Hallsensoren mit der Positionsveränderung entlang der Arbeitsfläche mit verschiedenen Distanzen zu der Magnetisierungsachse um die Magnetisierungsachse herum positioniert sein. Im Übrigen wird auf die Fachliteratur verwiesen.

In einer Weiterbildung der Erfindung sind der Dauermagnet und die Hallsensoren derart positioniert, dass ohne die Positionsveränderung entlang der Höhenrichtung durch die Positionsveränderung entlang der Arbeitsfläche, insbesondere bis zu einem möglichen größten Betrag, verursacht ein Betrag eines Sensorsignals der Sensorsignale, insbesondere streng monoton, größer ist bzw. wird und ein anderer Betrag eines anderen Sensorsignals der Sensorsignale, insbesondere streng monoton, kleiner ist bzw. wird. Der Einfluss der Positionsveränderung entlang der Höhenrichtung wird mittels Berücksichtigens mindestens oder genau eines größten Betrags der Sensorsignale berücksichtigt. Dies ermöglicht das Bestimmen des Betrags, und insbesondere der Richtung, der Positionsveränderung entlang der Arbeitsfläche mittels des Auswertens der Sensorsignale, wobei in dem Auswerten der Einfluss der Positionsveränderung entlang der Höhenrichtung auf die Sensorsignale berücksichtigt wird. Insbesondere kann der mögliche größte Betrag durch eine mechanische Grenze, insbesondere der Lagerung, definiert und/oder minimal 10 mm (Millimeter) und/oder maximal 50 mm, insbesondere 25 mm, sein. Zusätzlich oder alternativ kann der Begriff "stärker" oder "höher" für den Begriff ""größer" synonym verwendet werden. Weiter zusätzlich oder alternativ kann der Begriff "schwächer" oder "niedriger" für den Begriff "kleiner" synonym verwendet werden. Im Übrigen wird auf die Fachliteratur verwiesen.

In einer Weiterbildung der Erfindung wird das Auswerten mittels mindestens einer Zuordnung, insbesondere einer Kennlinie, ausgeführt. Die mindestens eine Zuordnung ordnet einem Betrag eines Sensorsignals der Sensorsignale einen Betrag einer Distanz des zugehörigen Hallsensors zu dem Dauermagneten zu. Insbesondere wird für alle Sensorsignale dieselbe mindestens eine Zuordnung verwendet. Dies ermöglicht ein einfaches Bestimmen des Betrags, und insbesondere der Richtung, der Positionsveränderung entlang der Arbeitsfläche mittels des Auswertens der Sensorsignale. Insbesondere kann die Kennlinie Stützstellen aufweisen. Zusätzlich oder alternativ kann die Zuordnung einem großen Betrag des Sensorsignals einen kleinen Betrag der Distanz und einem kleinen Betrag des Sensorsignals einen großen Betrag der Distanz zuordnen. Weiter zusätzlich oder alternativ kann der Begriff "Abstand" oder "Entfernung" für den Begriff "Distanz" synonym verwendet werden. Weiter zusätzlich oder alternativ kann die Distanz entlang der Arbeitsfläche und entlang der Höhenrichtung bzw. in drei Dimensionen sein. Weiter zusätzlich oder alternativ kann die Zuordnung, insbesondere werksseitig, vorgegeben und/oder hinterlegt bzw. gespeichert sein, insbesondere in dem Outdoorbearbeitungsroboter. Im Übrigen wird auf die Fachliteratur verwiesen.

In einer Ausgestaltung der Erfindung weist das Auswerten ein Auswählen und/oder ein Interpolieren und/oder ein Gewichten der mindestens oder genau einen Zuordnung aus einer Menge von mindestens zwei, insbesondere genau drei, Zuordnungen in Abhängigkeit mindestens oder genau des größten Betrags der Sensorsignale auf. Die Zuordnungen sind verschieden derart, dass die Zuordnungen für einen verschiedenen Betrag der Positionsveränderung des Dauermagnets von den Hallsensoren weg entlang der Höhenrichtung sind derart, dass eine Zuordnung der Zuordnungen für einen größeren Betrag der Positionsveränderung des Dauermagnets von den Hallsensoren weg entlang der Höhenrichtung einen kleineren größten Betrag der Sensorsignale aufweist, und dass eine andere Zuordnung der Zuordnungen für einen kleineren Betrag der Positionsveränderung des Dauermagnets von den Hallsensoren weg entlang der Höhenrichtung einen größeren größten Betrag der Sensorsignale aufweist, In anderen Worten: Die Zuordnungen sind für einen größeren Betrag der Positionsveränderung des Dauermagnets von den Hallsensoren weg entlang der Höhenrichtung in einem kleineren größten Betrag der Sensorsignale verschieden. Dies ermöglicht ein einfaches Berücksichtigen des Einflusses der Positionsveränderung entlang der Höhenrichtung auf die Sensorsignale in dem Auswerten. Insbesondere kann der Begriff "Umschalten" oder "Wechseln" für den Begriff "Auswählen" synonym verwendet werden. Zusätzlich oder alternativ kann der Begriff "Skalieren" für den Begriff "Gewichten" synonym verwendet werden. Weiter zusätzlich oder alternativ können das Auswählen, das Interpolieren und/oder das Gewichten dynamisch sein. Weiter zusätzlich oder alternativ können die Zuordnungen höhenspezifisch sein. Weiter zusätzlich oder alternativ kann der größte Betrag der Sensorsignale ein Beginn bzw. ein Anfang der Zuordnung sein. Weiter zusätzlich oder alternativ kann der größte Betrag der Sensorsignale eine Information liefern bzw. beinhalten, welche Zuordnung auszuwählen bzw. zu verwenden bzw. gültig ist bzw. passt. Weiter zusätzlich oder alternativ kann eine Zuordnung der Zuordnungen für einen möglichen größten Betrag der Positionsveränderung des Dauermagnets von den Hallsensoren weg entlang der Höhenrichtung sein. Insbesondere kann der mögliche größte Betrag durch eine mechanische Grenze, insbesondere der Lagerung, definiert und/oder minimal 10 mm und/oder maximal 50 mm, insbesondere 25 mm, sein.

In einer Ausgestaltung der Erfindung weist das Auswerten ein Bestimmen einer Position des Dauermagnets in Bezug auf die Hallsensoren in Abhängigkeit der Distanzen auf. Dies ermöglicht das Bestimmen des Betrags, und insbesondere der Richtung, der Positionsveränderung entlang der Arbeitsfläche. Insbesondere kann das Bestimmen ein Berechnen sein. Zusätzlich kann in dem Bestimmen, insbesondere ein Wissen über, die Lagerung des Berührungsteils und somit des Dauermagnets entlang der Höhenrichtung oberhalb des Chassis und somit der Hallsensoren berücksichtigt werden. Weiter zusätzlich oder alternativ kann die Position entlang der Arbeitsfläche und entlang der Höhenrichtung bzw. in drei Dimensionen sein und/oder einen Betrag aufweisen. Weiter zusätzlich oder alternativ kann das Auswerten ein Bestimmen einer Menge von Positionen des Dauermagnets in Bezug auf die Hallsensoren in Abhängigkeit der Distanzen für die Menge von den Zuordnungen und das Auswählen und/oder das Interpolieren und/oder das Gewichten der mindestens oder genau einen Zuordnung aus der Menge von den mindestens zwei Zuordnungen und somit der Position aus der bestimmten Menge von Positionen in Abhängigkeit mindestens oder genau des größten Betrags der Sensorsignale aufweisen. Weiter zusätzlich oder alternativ kann der Betrag, und insbesondere die Richtung, der Positionsveränderung entlang der Arbeitsfläche in Abhängigkeit der bestimmten Position bestimmt werden, insbesondere mittels Subtrahierens der Ruheposition des Dauermagnets in Bezug auf die Hallsensoren ohne die Positionsveränderung entlang der Arbeitsfläche von der bestimmten Position. Im Übrigen wird auf die Fachliteratur verwiesen.

In einer Weiterbildung der Erfindung wird das Betreiben in Abhängigkeit eines Erreichens oder eines Überschreitens eines Grenzwerts durch den bestimmten Betrag der Positionsveränderung entlang der Arbeitsfläche ausgeführt. Dies ermöglicht ein besonders gutes Betreiben des Outdoorbearbeitungsroboters. Insbesondere kann oder braucht nicht das Betreiben in Abhängigkeit eines Unterschreitens des Grenzwerts durch den bestimmten Betrag der Positionsveränderung entlang der Arbeitsfläche ausgeführt werden. Zusätzlich oder alternativ kann der Begriff "Schwellenwert" für den Begriff "Grenzwert" synonym verwendet werden. Weiter zusätzlich oder alternativ kann der Grenzwert, insbesondere werksseitig, vorgegeben und/oder hinterlegt bzw. gespeichert sein, insbesondere in dem Outdoorbearbeitungsroboter. Im Übrigen wird auf die Fachliteratur verwiesen.

In einer Weiterbildung der Erfindung weist das Betreiben in Abhängigkeit der bestimmten Richtung der Positionsveränderung entlang der Arbeitsfläche ein Ändern der Fahrbewegung zu der bestimmten Richtung hin, insbesondere in die bestimmte Richtung, auf. Dies ermöglicht ein besonders gutes Betreiben des Outdoorbearbeitungsroboters, insbesondere von dem berührten Hindernis weg. Im Übrigen wird auf die Fachliteratur verwiesen.

Der erfindungsgemäße autonome mobile Outdoorbearbeitungsroboter ist zum Ausführen des Verfahrens wie vorhergehend genannt, insbesondere ausgebildet. Der Outdoorbearbeitungsroboter kann den/die gleichen Vorteil/e wie für das Verfahren vorhergehend genannt ermöglichen. Insbesondere kann das Ausführen automatisch sein. Zusätzlich oder alternativ kann die englische Formulierung "programmed to perform the function/s of" für den Begriff "ausgebildet" synonym verwendet werden. Weiter zusätzlich oder alternativ kann der Outdoorbearbeitungsroboter eine, insbesondere elektrische, Bestimmungs-, Auswertungs- und/oder Betriebseinrichtung zu dem Ausführen aufweisen. Weiter zusätzlich oder alternativ kann der Outdoorbearbeitungsroboter, insbesondere die Bestimmungs-, Auswertungs- und/oder Betriebseinrichtung, eine Recheneinrichtung und/oder einen Prozessor und/oder einen Mikrocontroller und/oder eine Speichereinrichtung und/oder einen Computer aufweisen. Weiter zusätzlich oder alternativ kann der Outdoorbearbeitungsroboter wie vorhergehend für das Verfahren genannt ausgebildet sein. Im Übrigen wird auf die Fachliteratur verwiesen.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: eine schematische Perspektivansicht eines erfindungsgemäßen autonomen mobilen Outdoorbearbeitungsroboters zum, insbesondere beim, Ausführen eines erfindungsgemäßen Verfahrens zum Betreiben des Outdoorbearbeitungsroboters,
- Fig. 2: eine schematische Ansicht von unten eines Berührungsteils des Outdoorbearbeitungsroboters,
- Fig. 3: eine schematische Ansicht von einer Seite des Berührungsteils,
- Fig. 4: eine schematische Perspektivansicht eines Magnetsensorsystems des Outdoorbearbeitungsroboters,
- Fig. 5: eine schematische Draufsicht des Magnetsensorsystems,
- Fig. 6: eine schematische Schnittansicht von einer Seite eines Magnetfelds eines Dauermagnets des Magnetsensorsystems,
- Fig. 7: eine schematische Perspektivansicht eines Hallsensors von Hallsensoren des Magnetsensorsystems,
- Fig. 8: schematisch einen Graphen eines Sensorsignals des Hallsensors über einer Größe des Magnetfelds,
- Fig. 9: eine schematische Ansicht von einer Seite des Magnetsensorsystems,
- Fig. 10: ein Ablaufschema bzw. ein Ablaufdiagramm des Verfahrens,
- Fig. 11: eine weitere schematische Ansicht von einer Seite des Magnetsensorsystems,
- Fig. 12: ein weiteres Ablaufschema bzw. ein weiteres Ablaufdiagramm des Verfahrens,
- Fig. 13: schematisch einen Graphen eines Auswählens und/oder eines Interpolierens und/oder eines Gewichtens des Verfahrens über einem größten Betrag der Sensorsignale der Hallsensoren, und

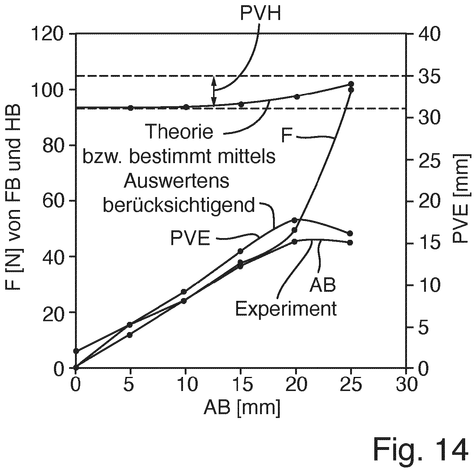

- Fig. 14: schematisch einen Graphen von Messungen einer Positionsveränderung des Dauermagnets in Bezug auf die Hallsensoren entlang einer Arbeitsfläche des Outdoorbearbeitungsroboters durch eine Ausweichbewegung des Berührungsteils verursacht und eines Bestimmens eines Betrags, und insbesondere einer Richtung, der Positionsveränderung entlang der Arbeitsfläche durch die Ausweichbewegung verursacht mittels eines Auswertens der Sensorsignale, wobei in dem Auswerten ein Einfluss einer Positionsveränderung des Dauermagnets in Bezug auf die Hallsensoren entlang einer Höhenrichtung zu der Arbeitsfläche durch die Ausweichbewegung verursacht auf die Sensorsignale berücksichtigt wird, des Verfahrens.

### DETAILLIERTE BESCHREIBUNG DER AUSFÜHRUNGSBEISPIELE

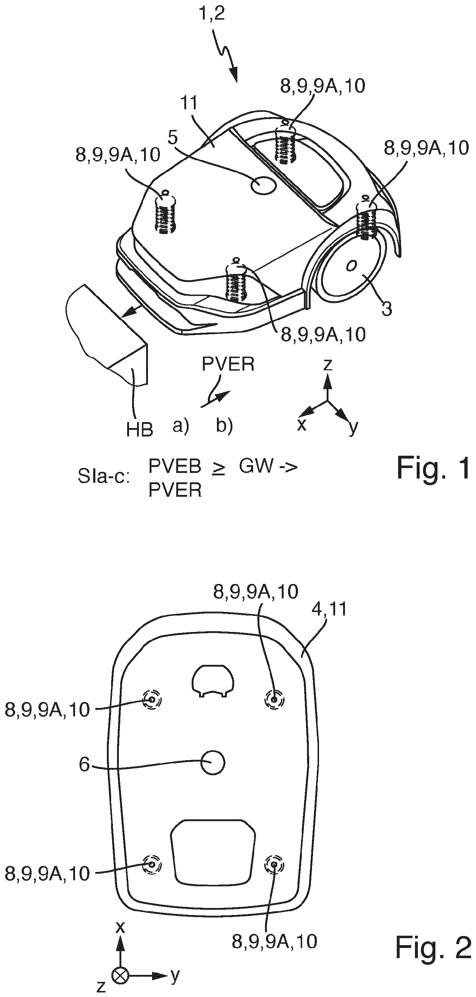

Fig. 1 bis 14 zeigen ein erfindungsgemäßes Verfahren zum Betreiben eines autonomen mobilen Outdoorbearbeitungsroboters 1, insbesondere eines Rasenmähroboters 2, und den erfindungsgemäßen autonomen mobilen Outdoorbearbeitungsroboter 1 zum, insbesondere beim, Ausführen des Verfahrens.

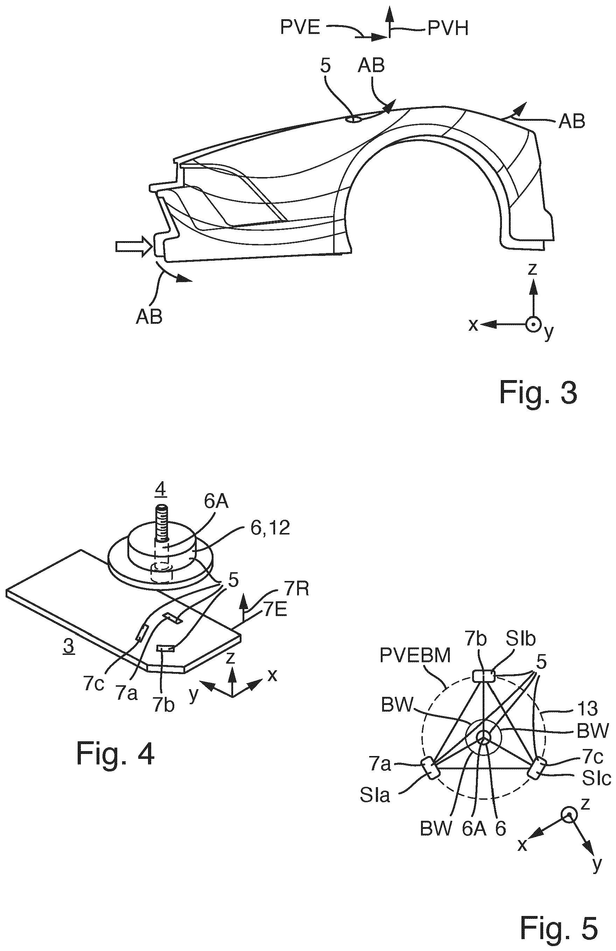

Der Outdoorbearbeitungsroboter weist ein Chassis 3, ein Berührungsteil 4 und ein Magnetsensorsystem 5 auf, wie in Fig. 1 bis 6, 9 und 11 gezeigt. Das Chassis 3 ist zu einer Fahrbewegung FB des Outdoorbearbeitungsroboters 1 auf einer Arbeitsfläche x, y ausgebildet, insbesondere bewegt, wie in Fig. 1 gezeigt. Das Berührungsteil 4 ist zu einer Ausweichbewegung AB durch die Fahrbewegung FB und eine Hindernisberührung HB verursacht ausgebildet und in Bezug auf das Chassis 3 beweglich gelagert, insbesondere bewegt, wie in Fig. 1, 3, 9, 11 und 14 gezeigt. Das Magnetsensorsystem 5 weist einen Dauermagneten 6 und mindestens zwei, in dem gezeigten Ausführungsbeispiel genau drei, Hallsensoren 7a, 7b, 7c auf, wie in Fig. 2, 4 bis 7 und 9 bis 11 gezeigt. In dem gezeigten Ausführungsbeispiel sind die Hallsensoren 7a-c an dem Chassis 3 befestigt und der Dauermagnet 6 ist an dem Berührungsteil 4 befestigt. In alternativen Ausführungsbeispielen kann der Dauermagnet an dem Chassis befestigt sein und die Hallsensoren können an dem Berührungsteil befestigt sein. Der Dauermagnet 6 und die Hallsensoren 7a-c sind zu einer Erzeugung eines jeweiligen Sensorsignals Sla, Slb, Slc in den Hallsensoren 7a-c durch ein Durchfließen der Hallsensoren 7a-c von einem Magnetfeld MF des Dauermagnets 6 verursacht ausgebildet und positioniert, insbesondere erzeugen, wie in Fig. 5 bis 8, 10, 12 und 13 gezeigt. Das Verfahren weist die Schritte auf:
a) Bestimmen eines Betrags PVEB, und insbesondere einer Richtung PVER, einer Positionsveränderung PVE des Dauermagnets 6 in Bezug auf die Hallsensoren 7a-c entlang der Arbeitsfläche x, y durch die Ausweichbewegung AB verursacht mittels Auswertens der erzeugten Sensorsignale Sla-c, wie in Fig. 1, 3, 9, 11 und 14 gezeigt. In dem Auswerten wird ein Einfluss einer Positionsveränderung PVH des Dauermagnets 6 in Bezug auf die Hallsensoren 7a-c entlang einer Höhenrichtung z zu der Arbeitsfläche x, y durch die Ausweichbewegung AB verursacht auf die erzeugten Sensorsignale Sla-c berücksichtigt, wie in Fig. 3, 12 und 14 gezeigt.
b) Betreiben des Outdoorbearbeitungsroboters 1 in Abhängigkeit des bestimmten Betrags PVEB, und insbesondere der bestimmten Richtung PVER, der Positionsveränderung PVE entlang der Arbeitsfläche x, y wie in Fig. 1 gezeigt.

Im Detail weist der Outdoorbearbeitungsroboter 1 mindestens eine Lagerung 8 auf, wie in Fig. 1 und 2 gezeigt. Mittels der Lagerung 8 ist das Berührungsteil 4 zu der Ausweichbewegung AB in Bezug auf das Chassis 3 beweglich gelagert.

In dem gezeigten Ausführungsbeispiel weist die Lagerung eine Schraubenfeder 9, insbesondere mit einer Schraubenachse 9A nicht-parallel, insbesondere orthogonal, zu der Arbeitsfläche x, y, auf.

Des Weiteren ist an mindestens drei, insbesondere genau vier, Lagerpunkten 10 das Berührungsteil 4 zu der Ausweichbewegung AB in Bezug auf das Chassis 3 beweglich gelagert, wie in Fig. 1 und 2 gezeigt. Die Lagerpunkte 10 sind in einer Draufsicht auf die Arbeitsfläche x, y um den Dauermagneten 6 und die Hallsensoren 7a-c herum positioniert, wie in Fig. 5 gezeigt.

Außerdem ist das Berührungsteil 4 entlang der Höhenrichtung z oberhalb des Chassis 3 gelagert, wie in Fig. 1 gezeigt.

Weiter ist das Berührungsteil 4 eine Abdeckhaube 11, wie in Fig. 1 bis 3 gezeigt.

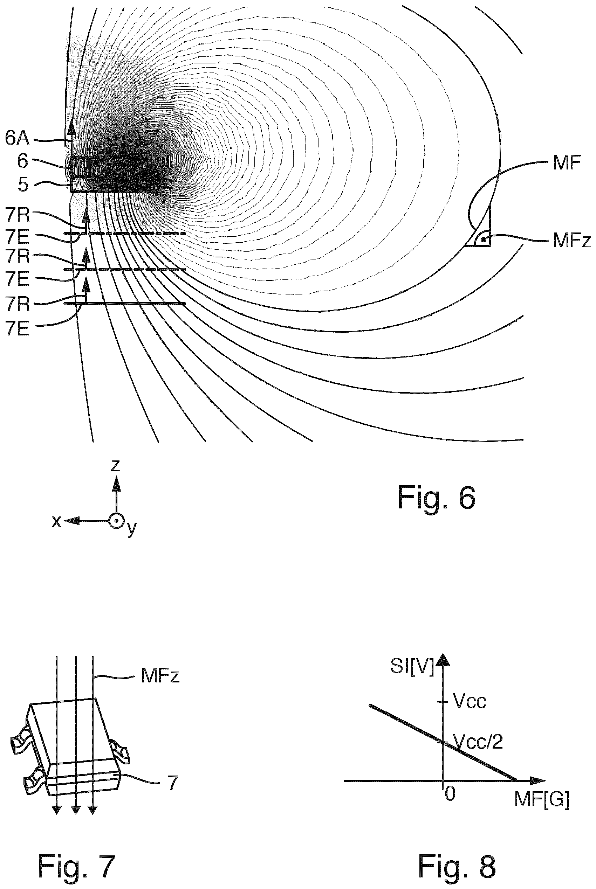

Zudem sind die Hallsensoren 7a-c in einer gemeinsamen Sensorebene 7E positioniert, wie in Fig. 4, 6, 9 und 11 gezeigt. Die Hallsensoren 7a-c weisen jeweils, insbesondere genau, eine zu der Sensorebene 7E nicht-parallele, insbesondere orthogonale, Erfassungsrichtung 7R auf. Die Hallsensoren 7a-c sind dazu ausgebildet, dass eine zu der Erfassungsrichtung 7R parallele Komponente MFz des Magnetfelds MF in den Hallsensoren 7a-c das jeweilige Sensorsignal Sla-c verursacht, wie in Fig. 6 und 7 gezeigt. Insbesondere ist die Sensorebene 7E nicht-orthogonal, insbesondere parallel, zu der Arbeitsfläche x, y.

Des Weiteren weist der Dauermagnet 6 eine Magnetisierungsachse 6A auf, wie in Fig. 4 bis 6 gezeigt. Die Magnetisierungsachse 6A ist nicht-parallel, insbesondere orthogonal, zu der Arbeitsfläche x, y und/oder der Sensorebene 7E. Insbesondere ist der Dauermagnet 6 ein axial magnetisierter, insbesondere kreisförmiger, Ringmagnet 12.

Außerdem weist der Dauermagnet 6 die Magnetisierungsachse 6A auf. Das Magnetsensorsystem 5 weist mindestens oder genau drei Hallsensoren 7a-c auf. Die Hallsensoren 7a-c sind ohne die Positionsveränderung PVE entlang der Arbeitsfläche x, y auf einem gemeinsamen Kreis 13 um die Magnetisierungsachse 6A herum positioniert, insbesondere mit einem gleichen Bogenwinkel BW zueinander versetzt, wie in Fig. 5 gezeigt.

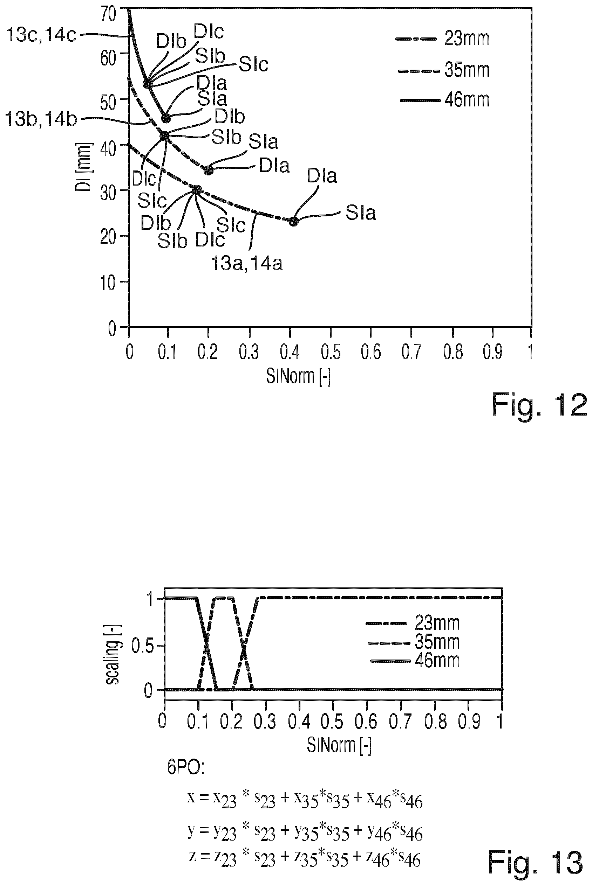

Weiter sind der Dauermagnet 6 und die Hallsensoren 7a-c derart positioniert, dass ohne die Positionsveränderung PVH entlang der Höhenrichtung z durch die Positionsveränderung PVE entlang der Arbeitsfläche x, y, insbesondere bis zu einem möglichen größten Betrag PVEBM, verursacht ein Betrag eines Sensorsignals Sla der Sensorsignale, insbesondere streng monoton, größer ist und ein anderer Betrag eines anderen Sensorsignals Slb, Sic der Sensorsignale, insbesondere streng monoton, kleiner ist, wie in Fig. 5, 9, 11 und 14 gezeigt. Der Einfluss der Positionsveränderung PVH entlang der Höhenrichtung z wird mittels Berücksichtigens mindestens oder genau eines größten Betrags der Sensorsignale Sla berücksichtigt, wie in Fig. 12 gezeigt.

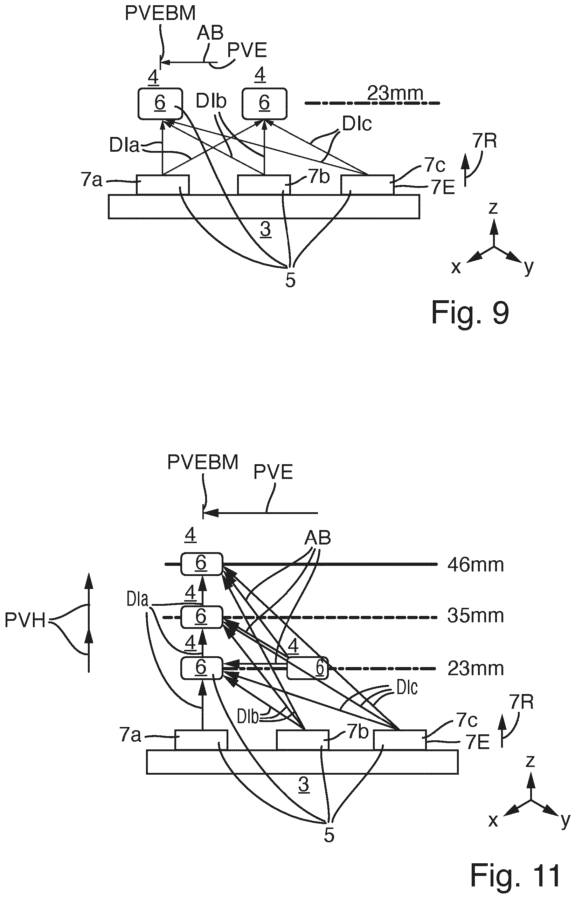

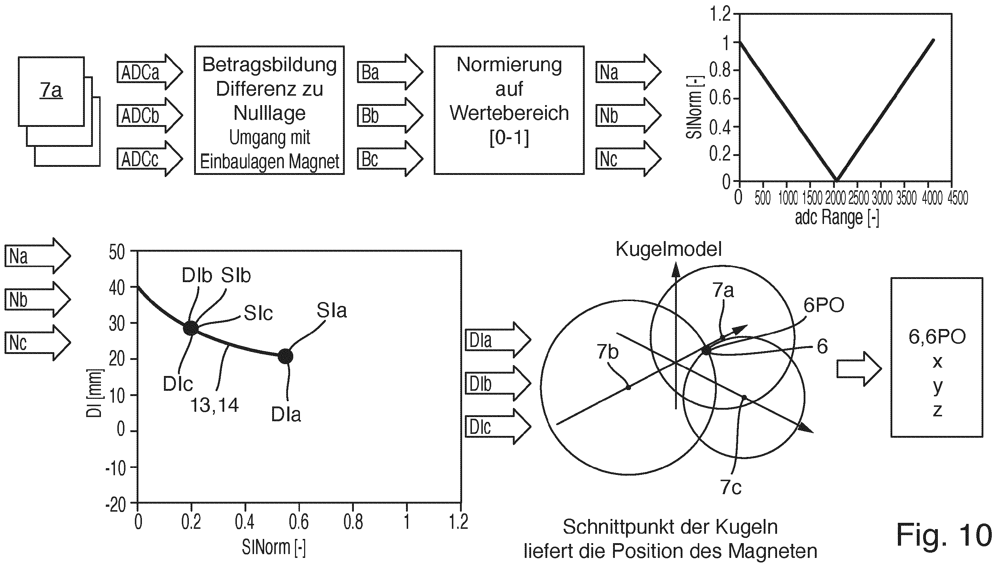

Zudem wird das Auswerten mittels mindestens einer Zuordnung 13a, 13b, 13c, insbesondere einer Kennlinie 14a, 14b, 14c, ausgeführt, wie in Fig. 10 und 12 gezeigt. Die mindestens eine Zuordnung 13a-c ordnet einem Betrag eines Sensorsignals Sla-c der Sensorsignale Sla-c einen Betrag einer Distanz Dla, Dlb, Die des zugehörigen Hallsensors 7a-c zu dem Dauermagneten 6 zu, wie in Fig. 9 bis 12 gezeigt. Insbesondere wird für alle Sensorsignale Sla-c dieselbe mindestens eine Zuordnung 13a-c verwendet.

Im Detail weist das Auswerten ein Auswählen und/oder ein Interpolieren und/oder ein Gewichten der mindestens oder genau einen Zuordnung 13a-c aus einer Menge von mindestens zwei, insbesondere genau drei, Zuordnungen 13a-c in Abhängigkeit mindestens oder genau des größten Betrags der Sensorsignale Sla auf, wie in Fig. 12 und 13 gezeigt. Die Zuordnungen 13a-c sind verschieden derart, dass die Zuordnungen 13a-c für einen verschiedenen Betrag der Positionsveränderung PVH des Dauermagnets 6 von den Hallsensoren 7a-c weg entlang der Höhenrichtung z sind derart, dass eine Zuordnung 13c der Zuordnungen für einen größeren Betrag der Positionsveränderung PVH des Dauermagnets 6 von den Hallsensoren 7a-c weg entlang der Höhenrichtung z einen kleineren größten Betrag der Sensorsignale Sla aufweist, in dem gezeigten Ausführungsbeispiel für 46 mm, und dass eine andere Zuordnung 13a, 13b der Zuordnungen für einen kleineren Betrag der Positionsveränderung PVH des Dauermagnets 6 von den Hallsensoren 7a-c weg entlang der Höhenrichtung z einen größeren größten Betrag der Sensorsignale Sla aufweist, in dem gezeigten Ausführungsbeispiel für 23 mm und 35 mm.

Des Weiteren weist das Auswerten ein Bestimmen einer Position 6PO des Dauermagnets 6 in Bezug auf die Hallsensoren 7a-c in Abhängigkeit der Distanzen Dla-c auf, wie in Fig. 10 und 13 gezeigt.

In dem gezeigten Ausführungsbeispiel weist das Auswerten ein Bestimmen einer Menge von Positionen 6PO des Dauermagnets 6 in Bezug auf die Hallsensoren 7a-c in Abhängigkeit der Distanzen Dla-c für die Menge von den Zuordnungen 13a-c und das Auswählen und/oder das Interpolieren und/oder das Gewichten der mindestens oder genau einen Zuordnung 13a-c aus der Menge von den mindestens zwei Zuordnungen 13a-c und somit der Position 6PO aus der bestimmten Menge von Positionen 6PO in Abhängigkeit mindestens oder genau des größten Betrags der Sensorsignale Sla auf. In anderen Worten: Für die Kennlinien 14a-c werden Positionen 6PO bestimmt. Die (End-)Position 6PO ergibt sich aus allen, insbesondere drei, Kennlinien 14a-c und ihrer Skalierung in Abhängigkeit des größten Betrags der Sensorsignale Sla.

Außerdem wird das Betreiben in Abhängigkeit eines Erreichens oder eines Überschreitens eines Grenzwerts GW durch den bestimmten Betrag PVEB der Positionsveränderung PVE entlang der Arbeitsfläche x, y ausgeführt, wie in Fig. 1 gezeigt.

Weiter weist das Betreiben in Abhängigkeit der bestimmten Richtung PVER der Positionsveränderung PVE entlang der Arbeitsfläche x, y ein Ändern der Fahrbewegung FB zu der bestimmten Richtung PVER hin, insbesondere in die bestimmte Richtung PVER, auf.

Wie in Fig. 14 gezeigt, stimmen Messungen bzw. Experiment der Positionsveränderung PVE entlang der Arbeitsfläche x, y durch die Ausweichbewegung AB verursacht und Theorie bzw. das Bestimmen des Betrags PVEB, und insbesondere der Richtung PVER, der Positionsveränderung PVE entlang der Arbeitsfläche x, y durch die Ausweichbewegung AB verursacht mittels des Auswertens der erzeugten Sensorsignale Sla-c, wobei in dem Auswerten der Einfluss der Positionsveränderung PVH entlang der Höhenrichtung z durch die Ausweichbewegung AB verursacht auf die erzeugten Sensorsignale Sla-c berücksichtigt wird, gut überein. In anderen Worten: das Verfahren ermöglicht die Positionsveränderung PVE entlang der Arbeitsfläche x, y durch die Ausweichbewegung AB verursacht in beliebigen Höhen gut zu bestimmen.

Im Übrigen ist die Positionsveränderung PVH entlang der Höhenrichtung z durch die Ausweichbewegung AB verursacht durch eine Hindernisberührung HB mit einer Front des Berührungsteils 4 bzw. einer frontalen, niedrigen Krafteinwirkung auf das Berührungsteil 4 verursacht und die, insbesondere vordere, Lagerung 8 des Berührungsteils 4 ermöglicht, wie in Fig. 3 gezeigt. Insbesondere führt die frontale, niedrige Krafteinwirkung auf das Berührungsteil 4 nicht nur zu der Positionsveränderung PVE entlang der Arbeitsfläche x, y bzw. einer Verschiebung des Berührungsteils 4, sondern auch zu der Positionsveränderung PVH entlang der Höhenrichtung z bzw. einer Rotation um die vordere Lagerung 8 des Berührungsteils 4. Die Rotation führt zu einer Anhebung des Dauermagnets 6.

Wie die gezeigten und oben erläuterten Ausführungsbeispiele deutlich machen, stellt die Erfindung ein vorteilhaftes Verfahren zum Betreiben eines autonomen mobilen Outdoorbearbeitungsroboters und den vorteilhaften autonomen mobilen Outdoorbearbeitungsroboter zum Ausführen des Verfahrens bereit, die verbesserte Eigenschaften aufweisen.

## Patentansprüche

1. Verfahren zum Betreiben eines autonomen mobilen Outdoorbearbeitungsroboters (1),
- der ein Chassis (3), ein Berührungsteil (4) und ein Magnetsensorsystem (5) aufweist,
- wobei das Chassis (3) zu einer Fahrbewegung (FB) des Outdoorbearbeitungsroboters (1) auf einer Arbeitsfläche (x, y) ausgebildet ist,
- wobei das Berührungsteil (4) zu einer Ausweichbewegung (AB) durch die Fahrbewegung (FB) und eine Hindernisberührung (HB) verursacht ausgebildet und in Bezug auf das Chassis (3) beweglich gelagert ist, und
- wobei das Magnetsensorsystem (5) einen Dauermagneten (6) und mindestens zwei Hallsensoren (7a, 7b, 7c) aufweist,
- wobei die Hallsensoren (7a-c) an dem Chassis (3) befestigt sind und der Dauermagnet (6) an dem Berührungsteil (4) befestigt ist, oder wobei der Dauermagnet an dem Chassis befestigt ist und die Hallsensoren an dem Berührungsteil befestigt sind, und
- wobei der Dauermagnet (6) und die Hallsensoren (7a-c) zu einer Erzeugung eines jeweiligen Sensorsignals (Sla, Slb, Slc) in den Hallsensoren (7a-c) durch ein Durchfließen der Hallsensoren (7a-c) von einem Magnetfeld (MF) des Dauermagnets (6) verursacht ausgebildet und positioniert sind,
- wobei das Verfahren die Schritte aufweist:
a) Bestimmen eines Betrags (PVEB), und insbesondere einer Richtung (PVER), einer Positionsveränderung (PVE) des Dauermagnets (6) in Bezug auf die Hallsensoren (7a-c) entlang der Arbeitsfläche (x, y) durch die Ausweichbewegung (AB) verursacht mittels Auswertens der erzeugten Sensorsignale (Sla-c), wobei in dem Auswerten ein Einfluss einer Positionsveränderung (PVH) des Dauermagnets (6) in Bezug auf die Hallsensoren (7a-c) entlang einer Höhenrichtung (z) zu der Arbeitsfläche (x, y) durch die Ausweichbewegung (AB) verursacht auf die erzeugten Sensorsignale (Sla-c) berücksichtigt wird, und
b) Betreiben des Outdoorbearbeitungsroboters (1) in Abhängigkeit des bestimmten Betrags (PVEB), und insbesondere der bestimmten Richtung (PVER), der Positionsveränderung (PVE) entlang der Arbeitsfläche (x, y).

2. Verfahren nach Anspruch 1,
- wobei der Outdoorbearbeitungsroboter (1) mindestens eine Lagerung (8) aufweist, wobei mittels der Lagerung (8) das Berührungsteil (4) zu der Ausweichbewegung (AB) in Bezug auf das Chassis (3) beweglich gelagert ist.

3. Verfahren nach Anspruch 1 oder 2,
- wobei an mindestens drei, insbesondere genau vier, Lagerpunkten (10) das Berührungsteil (4) zu der Ausweichbewegung (AB) in Bezug auf das Chassis (3) beweglich gelagert ist, und
- wobei die Lagerpunkte (10) in einer Draufsicht auf die Arbeitsfläche (x, y) um den Dauermagneten (6) und die Hallsensoren (7a-c) herum positioniert sind.

4. Verfahren nach einem der Ansprüche 1 bis 3,
- wobei das Berührungsteil (4) entlang der Höhenrichtung (z) oberhalb des Chassis (3) gelagert ist.

5. Verfahren nach einem der Ansprüche 1 bis 4,
- wobei das Berührungsteil (4) eine Abdeckhaube (11) ist.

6. Verfahren nach einem der Ansprüche 1 bis 5,
- wobei die Hallsensoren (7a-c) in einer gemeinsamen Sensorebene (7E) positioniert sind, jeweils, insbesondere genau, eine zu der Sensorebene (7E) nicht-parallele, insbesondere orthogonale, Erfassungsrichtung (7R) aufweisen und dazu ausgebildet sind, dass eine zu der Erfassungsrichtung (7R) parallele Komponente (MFz) des Magnetfelds (MF) in den Hallsensoren (7a-c) das jeweilige Sensorsignal (Sla-c) verursacht, insbesondere wobei die Sensorebene (7E) nicht-orthogonal, insbesondere parallel, zu der Arbeitsfläche (x, y) ist.

7. Verfahren nach einem der Ansprüche 1 bis 6,
- wobei der Dauermagnet (6) eine Magnetisierungsachse (6A) aufweist, wobei die Magnetisierungsachse (6A) nicht-parallel, insbesondere orthogonal, zu der Arbeitsfläche (x, y) und/oder der Sensorebene (7E) ist,
- insbesondere wobei der Dauermagnet (6) ein axial magnetisierter, insbesondere kreisförmiger, Ringmagnet (12) ist.

8. Verfahren nach einem der Ansprüche 1 bis 7,
- wobei der Dauermagnet (6) eine Magnetisierungsachse (6A) aufweist, und
- wobei das Magnetsensorsystem (5) mindestens oder genau drei Hallsensoren (7a-c) aufweist, wobei die Hallsensoren (7a-c) ohne die Positionsveränderung (PVE) entlang der Arbeitsfläche (x, y) auf einem gemeinsamen Kreis (13) um die Magnetisierungsachse (6A) herum positioniert sind, insbesondere mit einem gleichen Bogenwinkel (BW) zueinander versetzt.

9. Verfahren nach einem der Ansprüche 1 bis 8,
- wobei der Dauermagnet (6) und die Hallsensoren (7a-c) derart positioniert sind, dass ohne die Positionsveränderung (PVH) entlang der Höhenrichtung (z) durch die Positionsveränderung (PVE) entlang der Arbeitsfläche (x, y), insbesondere bis zu einem möglichen größten Betrag (PVEBM), verursacht ein Betrag eines Sensorsignals (Sla) der Sensorsignale, insbesondere streng monoton, größer ist und ein anderer Betrag eines anderen Sensorsignals (Slb, Slc) der Sensorsignale, insbesondere streng monoton, kleiner ist, und
- wobei der Einfluss der Positionsveränderung (PVH) entlang der Höhenrichtung (z) mittels Berücksichtigens mindestens oder genau eines größten Betrags der Sensorsignale (Sla) berücksichtigt wird.

10. Verfahren nach einem der Ansprüche 1 bis 9,
- wobei das Auswerten mittels mindestens einer Zuordnung (13a, 13b, 13c), insbesondere einer Kennlinie (14a, 14b, 14c), ausgeführt wird, wobei die mindestens eine Zuordnung (13a-c) einem Betrag eines Sensorsignals (Sla-c) der Sensorsignale (Sla-c) einen Betrag einer Distanz (Dla, Dlb, Dlc) des zugehörigen Hallsensors (7a-c) zu dem Dauermagneten (6) zuordnet, insbesondere wobei für alle Sensorsignale (Sla-c) dieselbe mindestens eine Zuordnung (13a-c) verwendet wird.

11. Verfahren nach den Ansprüchen 9 und 10,
- wobei das Auswerten ein Auswählen und/oder ein Interpolieren und/oder ein Gewichten der mindestens oder genau einen Zuordnung (13a-c) aus einer Menge von mindestens zwei, insbesondere genau drei, Zuordnungen (13a-c) in Abhängigkeit mindestens oder genau des größten Betrags der Sensorsignale (Sla) aufweist, wobei die Zuordnungen (13a-c) verschieden sind derart, dass die Zuordnungen (13a-c) für einen verschiedenen Betrag der Positionsveränderung (PVH) des Dauermagnets (6) von den Hallsensoren (7a-c) weg entlang der Höhenrichtung (z) sind derart, dass eine Zuordnung (13c) der Zuordnungen für einen größeren Betrag der Positionsveränderung (PVH) des Dauermagnets (6) von den Hallsensoren (7a-c) weg entlang der Höhenrichtung (z) einen kleineren größten Betrag der Sensorsignale (Sla) aufweist, und dass eine andere Zuordnung (13a, 13b) der Zuordnungen für einen kleineren Betrag der Positionsveränderung (PVH) des Dauermagnets (6) von den Hallsensoren (7a-c) weg entlang der Höhenrichtung (z) einen größeren größten Betrag der Sensorsignale (Sla) aufweist.

12. Verfahren nach Anspruch 10 oder 11,
- wobei das Auswerten ein Bestimmen einer Position (6PO) des Dauermagnets (6) in Bezug auf die Hallsensoren (7a-c) in Abhängigkeit der Distanzen (Dla-c) aufweist.

13. Verfahren nach einem der Ansprüche 1 bis 12,
- wobei das Betreiben in Abhängigkeit eines Erreichens oder eines Überschreitens eines Grenzwerts (GW) durch den bestimmten Betrag (PVEB) der Positionsveränderung (PVE) entlang der Arbeitsfläche (x, y) ausgeführt wird.

14. Verfahren nach einem der Ansprüche 1 bis 13,
- wobei das Betreiben in Abhängigkeit der bestimmten Richtung (PVER) der Positionsveränderung (PVE) entlang der Arbeitsfläche (x, y) ein Ändern der Fahrbewegung (FB) zu der bestimmten Richtung (PVER) hin, insbesondere in die bestimmte Richtung (PVER), aufweist.

15. Autonomer mobiler Outdoorbearbeitungsroboter (1) zum Ausführen eines Verfahrens nach einem der Ansprüche 1 bis 14.
